# EUROPEAN PATENT SPECIFICATION

(11) **EP 3 200 301 B1**
(45) Date of publication and mention of the grant of the patent: **05.06.2019**
(21) Application number: 15883395.4
(22) Date of filing: 21.12.2015
(51) Int. Cl.: H02J 3/01, G05F 1/70, H02M 7/48, H04B 3/54

(54) **RESONANCE SUPPRESSION DEVICE AND RESONANCE SUPPRESSION METHOD**
RESONANZUNTERDRÜCKUNGSVORRICHTUNG UND RESONANZUNTERDRÜCKUNGSVERFAHREN
DISPOSITIF DE SUPPRESSION DE RÉSONANCE ET PROCÉDÉ DE SUPPRESSION DE RÉSONANCE

(30) Priority: 27.02.2015 JP 2015038960
(43) Date of publication of application: 02.08.2017
(73) Proprietor: Fuji Electric Co., Ltd., Kawasaki-shi, Kanagawa 210-9530 (JP)
(72) Inventor: KOFUJI, Kentaro, Kawasaki-shi Kanagawa 210-9530 (JP)
(74) Representative: MERH-IP Matias Erny Reichl Hoffmann Patentanwälte PartG mbB
(86) International application number: PCT/JP2015/085690
(87) International publication number: WO 2016/136105

(56) References cited:
- WO-A1-2014/175214
- JP-A- 2008 048 520
- JP-A- 2013 090 396
- US-A- 5 397 927
- US-A1- 2013 135 907

## Description

### FIELD

The present invention is related to a resonance suppression apparatus and a resonance suppression method of a power system having a first power facility and a second power facility.

### BACKGROUND

A power system is a system that generates/transmits/distributes power by using a sine wave of a commercial frequency (50/60Hz) as a fundamental wave. A voltage/current component other than a fundamental wave such as a harmonic, flicker, etc. affects power systems as a component that deteriorates the power quality.

When inductance and capacitance are involved in a power system, a resonance phenomenon occurs in which a voltage/current is amplified at a particular frequency.

In a large-scale wind power generation facility, the power system usually includes for example a wind power generator, an LC filter, an RC filter, a transformer, an overhead line, a power collection cable, a long-distance cable, a capacitor bank, a shunt reactor, etc. As a type of a wind power generator, a DFIG (Doubly-Fed Induction Generator) and a type that is connected by using a converter such as a full converter etc. are included.

In such a case, the wind power generator or an external power system generates a harmonic, and when capacitance included in a filter, a cable, etc. and inductance included in a transformer, an overhead line, etc. cause resonance, there is a possibility that the harmonic will expand and a specified power quality (a standard specified by government agency or power supplier) will not be achieved.

In response to this problem, Patent Document 1 below proposes a resonance suppression apparatus that cancels a harmonic voltage by controlling a parallel inverter.

Patent Document 2 below describes a distribution system active filter device that has a distribution system active filter device in a prescribed location on the distribution route so as to control a harmonic expansion phenomenon and control the harmonic voltages in all nodes on the distribution route so that the voltages are equal to or lower than a prescribed set value.

Patent Document 3 below describes a power conversion device that superposes a harmonic suppression current reference value calculated by harmonic suppression control means on a current reference value of current control means so as to control the harmonic.

### [Patent Documents]

[Patent Document 1] WO 2014/175214 A1
[Patent Document 2] Japanese Laid-open Patent Publication No. 2002-320329
[Patent Document 3] Japanese Laid-open Patent Publication No. 2013-090396

### SUMMARY

Installing the resonance suppression apparatus of Patent Document 1 leads to a possibility that a resonance phenomenon will occur that is different from one recognized before the installation.

Even applying the resonance suppression apparatus of Patent Document 1 to a system obtained by approximating a general system to a simplified system by using for example Thevenin's theorem or Norton's theorem leads to a possibility that a new resonance will occur as described above. If the resonance frequency in the system and the impedance of the power facility are known, it may be possible to prepare a countermeasure. However, it is very difficult to recognize the resonance frequency of the system approximated by using a known theory and the impedance of the power facility.

Also, when the facility of the power system is replaced with a system in which the resonance point varies, the above method cannot be applied.

As described above, a new resonance phenomenon accompanying the variation in the impedance of a power facility reduces the suppression effect of resonance in the method of Patent Document 1, which could possibly cause some problem.

Accordingly, it is an object of the present invention to provide a resonance suppression apparatus and a resonance suppression method that can suppress a resonance phenomenon in an entire system and a resonance phenomenon that is subsidiarily caused by each power facility.

In order to solve the above problem, the present invention is a resonance suppression apparatus that suppresses resonance occurring in a power system in which a first power facility is connected to a second power facility via a power line, by supplying a compensating current to the power line from a power conversion unit, including
a current reference value generation unit that generates a current reference value by subtracting a value obtained by multiplying a second transfer function by a harmonic component of a voltage input from the power system from a value obtained by multiplying a first transfer function by a harmonic component of a current input from at least one of the first and second power facilities, wherein
the current reference value generation unit inputs the current reference value to the power conversion unit so as to cause the power conversion unit to supply the compensating current.

Also, a resonance suppression apparatus of the present invention is a resonance suppression apparatus that suppresses resonance occurring in a power system in which a first power facility is connected to a second power facility via a power line, including:
a current reference value generation unit that generates a current reference value by subtracting a value obtained by multiplying a second transfer function by a harmonic component of a voltage input from the power system from a value obtained by multiplying a first transfer function by a harmonic component of a current input from at least one of the first and second power facilities; and
the power conversion unit that supplies a compensating current to the power line on the basis of the current reference value.

Also, a resonance suppression method according to the present invention is a resonance suppression method that suppresses resonance occurring in a power system in which a first power facility is connected to a second power facility via a power line, including:
generating a current reference value by subtracting a value obtained by multiplying a second transfer function by a harmonic component of a voltage input from the power system from a value obtained by multiplying a first transfer function by a harmonic component of a current input from at least one of the first and second power facilities; and
supplying a compensating current to the power line by conducting a prescribed power conversion on the current reference value.

From the above, the present invention suppresses the resonance phenomenon of an entire system by a voltage term generated by a current reference value generation unit and suppresses by a current term a resonance phenomenon that is caused subsidiarily by each power facility. This makes it possible to suppress both the resonance phenomenon of an entire system and a resonance phenomenon subsidiarily caused by each power facility.

Note that the known active filtering method adopts a method of subtracting a term obtained by multiplying a control gain by a measured current so as to generate a compensation current reference value and cancelling a harmonic current injecting to the system.

It is to be understood that the present invention, by contrast, adds a term of a current to the above voltage term for the purpose of suppressing a resonance phenomenon subsidiarily caused by each power facility and uses a term of a current to achieve an object that is completely different from that of the known active filtering method.

### BRIEF DESCRIPTION OF DRAWINGS

FIG. 1 illustrates an example of a system configuration having a resonance suppression apparatus of a related art technique for the present invention;
FIG. 2 illustrates a configuration example of the current reference value generation unit illustrated in FIG. 1;
FIG. 3 illustrates a power system obtained by simplifying a power system having a power supply system and a wind farm;
FIG. 4 illustrates a configuration example of a system in a case when an example of a general system is converted into a simplified system by using Thevenin's theorem;
FIG. 5 illustrates a system configuration outline having a resonance suppression apparatus of the embodiment of the present invention;
FIG. 6 illustrates a configuration example of a current reference value generation unit according to the embodiment of the present invention;
FIG. 7 illustrates another configuration example of the current reference value generation unit according to the embodiment of the present invention; and
FIG. 8 illustrates an example of a comparison between frequency analysis results in a case when the resonance suppression apparatus of the present invention is applied.

### DESCRIPTION OF EMBODIMENTS

Hereinafter, explanations will be given for the embodiment of the present invention by referring to the drawings.

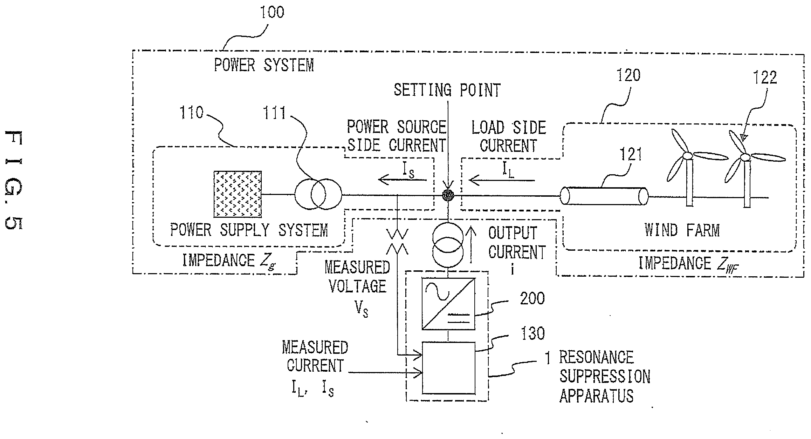

FIG. 5 illustrates a system configuration outline having a resonance suppression apparatus 1 of an embodiment of the present invention. In a power system 100 consisting of a supply system (a second power facility, which will be referred to as a "supply system" hereinafter) 110 having a first prescribed impedance and a system (a first power facility, which will be referred to as a "wind farm" hereinafter) 120 consisting of a wind farm a having a second prescribed impedance, the resonance suppression apparatus 1 of the embodiment of the present invention in FIG. 5 connects in parallel to a desired connection point (referred to as a "setting point" hereinafter) of a power line which connects the supply system 110 and the wind farm 120.

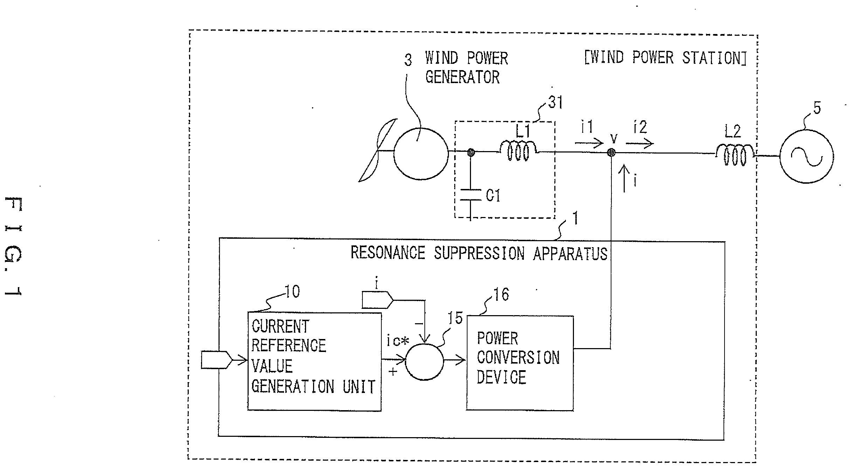

Before the detailed explanations for the resonance suppression apparatus 1 of the embodiment of the present invention, resonance suppression apparatus related art will be explained by referring to FIG. 1 through FIG. 4.

The resonance suppression apparatus of Patent Document 1 exemplified as a related art is for achieving the object described below.
(a) Reduction in the capacity of the inverter by reducing a compensating current in a case when a harmonic distortion caused by a harmonic is suppressed
(b) Suppression of resonance by using an appropriate transfer function even when a resonance point changes

FIG. 1 illustrates an example of a system configuration having a resonance suppression apparatus of a related art technique for the present invention. Explanations will be given for a configuration example of a resonance suppression apparatus having a current reference value generation unit that is a related art for the present invention. The resonance suppression apparatus 1 shown in FIG. 1 is installed in for example a wind power station, and functions as an apparatus for suppress resonance caused by the connection between a wind power generator 3 (an example of a power facility) having a harmonic filter 31 and a power supply system 5 via a power line. Also, the resonance suppression apparatus 1 is configured to include a current reference value generation unit 10, an addition unit 15, and a power conversion device 16. Note that the power conversion device 16 may be arranged outside the resonance suppression apparatus 1 instead of being included in the resonance suppression apparatus 1.

In FIG. 1, the wind power generator 3 is illustrated as an object that represents one or a plurality of wind power generators. The wind power generator 3 is connected to the power supply system 5, and the capacitance of the harmonic filter that is included in each of one or a plurality of wind power generators is illustrated as summarized capacitance C1. The inductance of the transformer included in each of one or a plurality of wind power generators is illustrated as summarized inductance L1. Further, L2 denotes total inductance connected to the power supply system 5.

To the current reference value generation unit 10 illustrated in FIG. 1, voltage v (a voltage of a power system) at a connection point on the power line that connects the wind power generator 3 and the power supply system 5 is input. It is assumed that voltage v at a connection point (a voltage of the power system) includes a voltage at a connection point on the power line connecting the wind power generator 3 and the power supply system 5 and a voltage in the vicinity of a connection point on the power line connecting the wind power generator 3 and the power supply system 5.

The current reference value generation unit 10 outputs current reference value Ic* as a value for an output current (compensating current) i to be supplied to the power line from the power conversion device 16.

To the addition unit 15, compensating current i and current reference value Ic* for it are input. To the power conversion device 16, difference (Ic*-i) between current reference value Ic* and compensating current i is input as an output from the addition unit 15.

The power conversion device 16 converts difference (Ic*-i) between current reference value Ic* and compensating current i into a voltage reference value (not shown), further converts that voltage reference value into an alternating current, and outputs that alternating current (compensating current) i to the power line.

The power conversion device 16 is connected, via a transformer (not shown), in parallel to the power line that is connected to the wind power generator 3 and the power supply system 5. Compensating current i output from the power conversion device 16 is mixed with output current i1 of the wind power generator 3 and is supplied to the power supply system 5 as current i2.

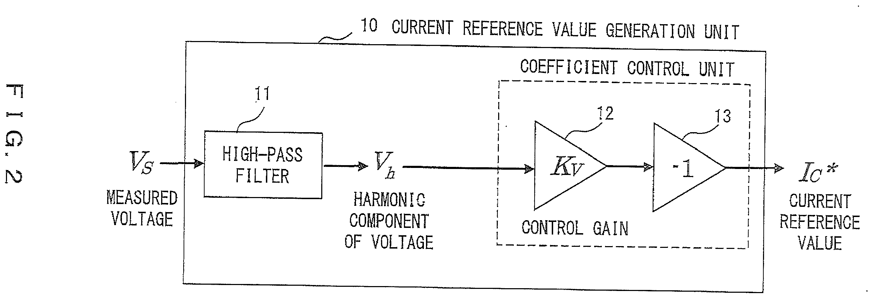

FIG. 2 illustrates a configuration example of the current reference value generation unit 10 illustrated in FIG. 1. The current reference value generation unit 10 illustrated in FIG. 2 extracts a harmonic component from measured voltage V_{S} by inputting measured voltage V_{S} (equivalent to voltage v illustrated in FIG. 1) to a high-pass filter 11. Then, the voltage of the extracted harmonic component, i.e., harmonic voltage Vₕ is input to a coefficient control unit.

The coefficient control unit multiplies gain Kᵥ by input harmonic voltage Vₕ, and makes this value pass through an inverse multiplier 13 so that it behaves as the pure resistance of resistance value 1/Kᵥ and thereby generates current reference value Ic*.

In FIG. 1 again, the power conversion device 16 takes the difference between current reference value Ic* and compensating current i, and further converts the voltage reference value (not shown) so as to output that alternating current (compensating current) i, which are as described above and so further explanations will be omitted.

Incidentally, even when a resonance suppression apparatus as a related art technique for the present invention is applied to the power system sillustrated in FIG. 1, there is a possibility that a resonance phenomenon not recognized before the application will occur. For example, explanations will be given to a power system obtained by simplifying a power facility as below.

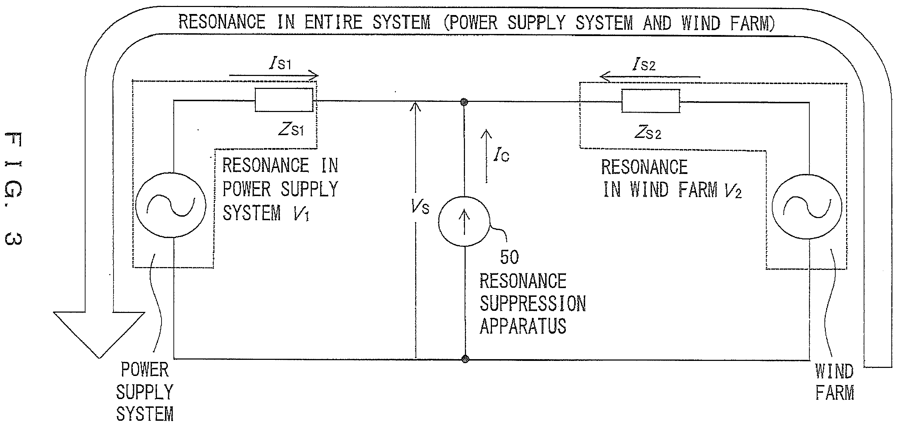

FIG. 3 illustrates a power system obtained by simplifying a power system having a power supply system and a wind farm.

In FIG. 3, in the power system before the installation of a resonance suppression apparatus 50, when the illustrated resonance suppression apparatus 50 is open and sum Z_{S1}+Z_{S2} of impedance Z_{S1} of a power supply system and impedance Z_{S2} of a wind farm becomes small, the harmonic current of the entire system is increased by series resonance. Note that those skilled in the art have understood that a wind farm is a facility in which many wind turbines are installed at one location so as to conduct large-scale power generation.

As illustrated in FIG. 3, to the power line connecting the power supply system and a wind farm, the resonance suppression apparatus 50 having the current reference value generation unit 10 illustrated in FIG. 2 is connected in parallel. Then, the resonance suppression apparatus 50 operates as a pure resistance of resistance value 1/Kᵥ so as to attempt to suppress that series resonance.

It may seem that the suppression effect of resonance can be increased in the resonance suppression apparatus, which is a related art technique of the present invention, by increasing control gain Kᵥ.

However, an excessive increase in control gain Kᵥ decreases virtual resistance value 1/Kᵥ of the resonance suppression apparatus 50, virtually causing a short circuit at the connection point in the resonance suppression apparatus 50.

Further consideration of this point indicates that there is a possibility that a wind farm will form a resonance circuit so as to amplify a harmonic when for example impedance Z_{S2} of the wind farm has a resonance point.

Note that while it is assumed that a wind farm has a resonance point in the above, because a power supply system can have a resonance point, such a case as well involves a possibility of the amplification of a harmonic.

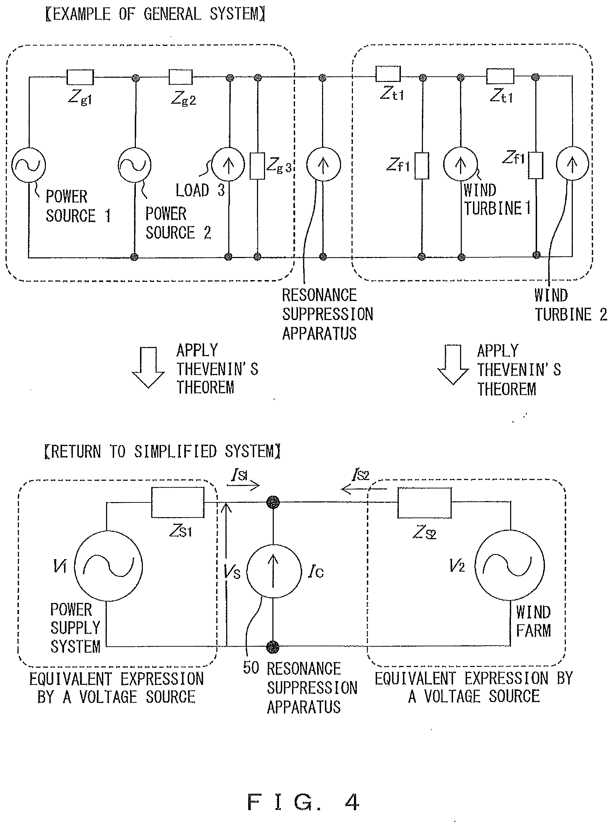

FIG. 4 illustrates a configuration example of a system in a case when an example of a general system is converted into a simplified system by using Thevenin's theorem. As illustrated in FIG. 4, even when approximation to a simplified system by using Thevenin's theorem is possible, when a power facility having the simplified system has a resonance circuit, there is a possibility of the occurrence of a new resonance phenomenon.

Note that while an example of a general system is approximated to a simplified system by using Thevenin's theorem in the above, Norton's theorem may be used for the approximation to a simplified system.

The above completes the explanations for the related art techniques for the resonance suppression apparatus of the present invention, and explanations will hereinafter be given for the resonance suppression apparatus 1 according to the embodiment of the present invention.

The resonance suppression apparatus 1 according to the embodiment of the present invention can further suppress a resonance phenomenon that is subsidiarily caused by each power facility when the resonance phenomenon of the entire system is suppressed by using measured voltage V_{S} illustrated in FIG. 2 so as to generate current reference value Ic*.

The resonance suppression apparatus 1 according to the embodiment of the present invention is connected in parallel to a desired connection point (setting point) on the power line connecting the power supply system 110 and the wind farm 120 in the power system 100 consisting of the power supply system 110 and the wind farm 120. "Desired" used herein is defined as a point on a power system suitable for resonance suppression. In other words, even though which of the power supply system 110 and the wind farm 120 it refers to is not known, a resonance circuit is formed so as to generate a harmonic in either of them, and a point suitable for suppressing it, i.e., the setting point of the resonance suppression apparatus, is determined through a search, whereas the setting point of the resonance suppression apparatus is not limited to this example.

The resonance suppression apparatus 1 has a current reference value generation unit 130 and a power conversion device 200. To the current reference value generation unit 130, measured voltage V_{S} is input, and measured current I_{S} or I_{L} are input additionally, and an reference value to be input to the power conversion device 200 is generated. To the power conversion device 200, an reference value generated by the current reference value generation unit 130 is input, and compensating current i obtained by operating a prescribed power conversion on this reference value is output to a desired connection point (setting point) on the power line. The power conversion device 200 may be included in the resonance suppression apparatus 1 or may be connected to something outside the resonance suppression apparatus 1.

The resonance suppression apparatus 1 according to the embodiment of the present invention illustrated in FIG. 5 has a configuration of the current reference value generation unit 130 that is different from that of the resonance suppression apparatus of the related art technique illustrated in FIG. 1. The resonance suppression apparatus 1 illustrated in FIG. 5 has an addition unit (not shown) to which compensating current i and current reference value Ic* for it are input, similarly to the resonance suppression apparatus of the related art technique explained in FIG. 1. To the power conversion device 200, difference (I_{C}*-i) between current reference value Ic* and compensating current i is input as an output of the addition unit (not shown). Then, the power conversion device 200 converts difference (Ic*-i) between current reference value Ic* and compensating current i into a voltage reference value, further converts that voltage reference value into an alternating current, and outputs that alternating current (compensating current) i to the power line.

In FIG. 5, the total impedance on the power supply system 110 side is recognized as Z_{g} so that a transformer 111 is included on the power supply system 110 side. Also, on the wind farm 120 side, a cable 121 is included, and the total impedance on the wind farm 120 side is recognized as Z_{WF}.

Accordingly, it is desired that a setting point to which the resonance suppression apparatus 1 is connected be located at a point which is on the power line on which the power supply system (second power facility) 110 and the wind farm (first power facility) 120 are connected to each other and at which the impedance of the power supply system (second power facility) 110 and the impedance of the wind farm (first power facility) 120 are recognized individually.

The power system 100 includes the power supply system (second power facility) 110 and the wind farm (first power facility) 120, and the resonance suppression apparatus 1 is connected in parallel at the setting point of the power line connecting the power supply system 110 and the wind farm 120.

A voltmeter is installed in the power system 100, voltage V_{S} of the power supply system is measured, and measured voltage V_{S} is input to the current reference value generation unit 130.

Also, current I_{S} supplied to the power supply system (second power facility) 110 (which will be referred to as a "power source side current" for the sake of convenience) and current I_{L} supplied from the wind farm (first power facility) 120 (which will be referred to as a "load side current" for the sake of convenience) are measured by an ammeter (not shown), and measured current I_{S} or I_{L} is input to the current reference value generation unit 130.

When the connection of the resonance suppression apparatus 1 subsidiarily causes a resonance phenomenon on both the power supply system (second power facility) 110 and the wind farm (first power facility) 120, both of measured currents I_{S} and I_{L} may be input to the current reference value generation unit 130. Detailed explanations will be given later for the current reference value generation unit 130 according to the embodiment of the present invention.

The current reference value generation unit 130 generates a current reference value on the basis of the measured voltage and the value of the current measured by the ammeter (not shown). The generated current reference value is input to the addition unit (not shown). To the addition unit (not shown), compensating current i is also input. To the power conversion device 200, difference (Ic*-i) between current reference value Ic* output from the addition unit (not shown) and compensating current i is input.

Then, the power conversion device 200 converts difference (Ic*-i) between current reference value Ic* and compensating current i into a voltage reference value, further converts that voltage reference value into an alternating current, and outputs that alternating current (compensating current) i. The configuration of FIG. 5 in which the addition unit (not shown) inputs difference (Ic*-i) between current reference value Ic* and compensating current i to the power conversion device is similar to that of the addition unit 15, illustrated in FIG. 1 and thus that should be referred to.

As impedance Z_{g} of the power supply system 110, the total inductance of the power supply system including the transformer 111 is assumed. The reactance of the power supply system 110 is in proportion to the product of the inductance and the frequency, and accordingly the impedance of the power supply system 110 becomes greater with high frequency components and power system side current I_{S} does not flow easily.

The wind farm 120 side includes the inductance of the cable 121 and capacitance (not shown), and accordingly the impedance is reduced by the series resonance at a particular frequency, making load side current I_{L} flow easily.

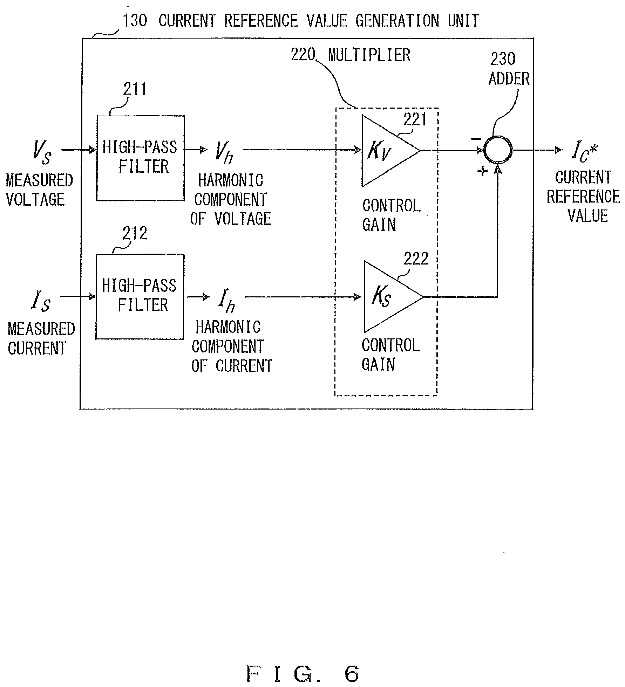

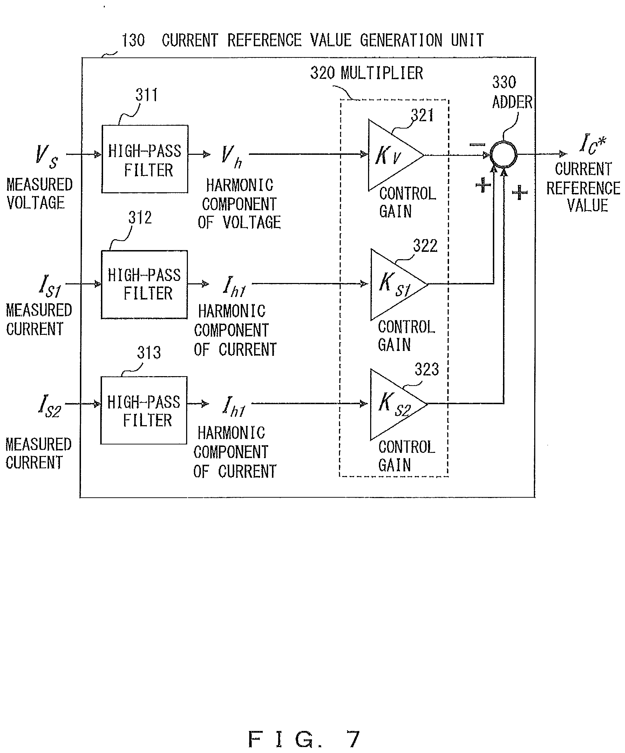

Because the wind farm 120 side has a resonance point that generates a subsidiary resonance phenomenon, load side current I_{L} is input to the current reference value generation unit 130 according to the embodiment of the present invention illustrated in FIG. 6 or FIG. 7, which will be described later, so as to generate current reference value Ic* and to input generated current reference value Ic* to an adder (not shown), difference (Ic*-i) between current reference value Ic* and compensating current i is output from the adder (not shown) to the power conversion device 200, and compensating current i is supplied by the power conversion device 200 to the setting point of the power system 100 illustrated in FIG. 5.

Switching of the number of lines of the cable 121 etc. varies the impedance, and the resonance suppression method of the present invention is particularly effective for impedance Z_{WF} on the wind farm 120 side.

Also, while the above explanations are based on an example in which load side current I_{L} is input to the current reference value generation unit 130 so as to generate current reference value Ic*, when the power supply system 110 side has a resonance suppression point, power source side current I_{S} is input to the current reference value generation unit 130 so that current reference value Ic* is generated. Also, when both of the above power facilities have a resonance point that generates a subsidiary resonance phenomenon, current reference value Ic* is generated from currents input from both of the power facilities.

FIG. 6 and FIG. 7 illustrates configuration examples of a current reference value generation unit 130 according to the embodiment of the present invention. In FIG. 6, the configuration example of the current reference value generation unit according to the embodiment of the present invention inputs voltage V_{S} measured by a voltage measurement unit (not shown) to a first high-pass filter 211 so as to extract a harmonic component Vₕ.

Then, it multiplies gain Kᵥ by extracted harmonic component Vₕ by using a first multiplier 221 (multiplied by a second transfer function) and generates a term of a voltage harmonic component, which is a voltage value obtained by the multiplication (voltage term hereinafter), so as to apply it to one of the terminals (negative terminal) of an adder 230.

Also, current supplied from a power facility on the side having a resonance point and measured by a current measurement unit (not shown), i.e., measured current I_{S} is input to a second high-pass filter 212, and thereby harmonic component Iₕ supplied from a power facility on the side having a resonance point is extracted.

Then, it multiplies gain Ks by the extracted harmonic component Iₕ of a current supplied from a power facility on the side having a resonance point by using a multiplier 222 (multiplied by first transfer function) so as to generate a term of a harmonic component of a current input from a power facility on the side having a resonance point (current term hereinafter) (current value obtained by the multiplication), and applies it to the other of the terminals of the adder 230.

In the adder 230, the voltage term of the voltage harmonic component multiplied by the gain (voltage value obtained by the multiplication) is subtracted, the current term (current value obtained by the multiplication) of the harmonic component of a current supplied from a power facility on the side having a resonance point is added, and current reference value Ic* is generated.

FIG. 7 illustrates another configuration example of the current reference value generation unit 130 according to the embodiment of the present invention. FIG. 7 is based on an assumption that it is a system including two wind farms (first power facilities) and one power supply system (second power facility) and that each of the two wind farms has a resonance point. In order to discriminate between the two wind farms, they will be referred to as first power facility (a) and first power facility (b).

In FIG. 7, another configuration example of the current reference value generation unit according to the embodiment of the present invention extracts harmonic component Vₕ by inputting voltage V_{S} measured by a voltage measurement unit (not shown) to a first high-pass filter 311. Then, it multiplies gain Kᵥ by extracted harmonic component Vₕ by using a first multiplier 321 (multiplied by a second transfer function) so as to generate a term of a voltage harmonic component (voltage term), which is a voltage value obtained by the multiplication, and applies it to a first terminal (negative terminal) of the adder 330.

Also, it inputs a current supplied from the first power facility having a resonance point and measured by a current measurement unit (not shown), i.e., first measured current I_{S1}, to a second high-pass filter 312, and thereby first current harmonic component Iₕ₁ supplied from the first power facility (a) having a resonance point is extracted.

Then, it multiplies gain K_{S1} by first current harmonic component Iₕ₁ supplied from the first power facility (a) having a resonance point by using the second multiplier 322 (multiplied by first transfer function (a)) so as to generate a term of a first current harmonic component (current term 1) (first current value obtained by multiplication) supplied from the first power facility (a) having a resonance point, and applies it to the second terminal (positive terminal 1) of the adder 330.

Also, it inputs, to a third high-pass filter 313, a current supplied from the first power facility (b) having a resonance point, measured by a current measurement unit (not shown), and supplied from the first power facility (b), i.e., second measured current I_{S2}, so as to extract second current harmonic component Iₕ₂ supplied from the first power facility (b) having a resonance point.

Then, it multiplies gain Ks2 by second current harmonic component Iₕ₂ supplied from the first power facility (b) having a resonance point by using a third adder 323 so as to generate a term of the second current harmonic component supplied from the first power facility (b) having a resonance point (current term 2) (second current value obtained by the multiplication) so as to apply it to the third terminal (positive terminal 2) of the adder 330.

In the adder 330, the voltage term of the voltage harmonic component multiplied by the gain (voltage value obtained by the multiplication) is subtracted, the current terms of the first and second harmonic components supplied from the first and second power facilities (a) and (b) having a resonance point (first and second current values obtained by the multiplication) are added, and current reference value Ic* is generated.

The explanations in FIG. 7 are based on an assumption that subsidiary resonance phenomena occur at two locations of two wind farms so that the measured current of each of the first power facilities (a) and (b) is input to the current reference value generation unit 130 so as to add them. If a subsidiary resonance phenomenon occurs in a single power supply system in addition to the two wind farms, it is sufficient to input a measured current of the second power facility to the current reference value generation unit 130 so as to add it. Note that each of first transfer function (a), first transfer function (b), and the second transfer function is different for each power facility.

Here, brief explanations will be given for an example of how to determine a gain in a multiplier such as gain Kᵥ in FIG. 6, which is not explained in the explanations of FIG. 6 or FIG. 7.

The first parameter for determining gain Kᵥ in FIG. 6 is impedance of all power facilities that are recognized by the power system illustrated in FIG. 5.

The second parameter for determining gain Kᵥ is a rated voltage/rated current of each power facility that is recognized by being seen from a setting point illustrated in FIG. 5.

Thereafter, the occurrence amount of harmonics of a power facility seen from a setting point in the resonance suppression apparatus 1 illustrated in FIG. 5 is recognized, and when it is possible to detect whether or not the content percentage of the target harmonic is a prescribed ratio such as 10% or higher, gain Kᵥ resulting in the content percentage of the harmonic that is equal to or lower than a prescribed value such as 3% or lower is determined by simulation using "EMTP", which is commercially available software for analyzing a transient phenomenon of a power system.

While explanations are given for how to determine gain Kᵥ in the above, other gains such as gain Ks can be determined similarly.

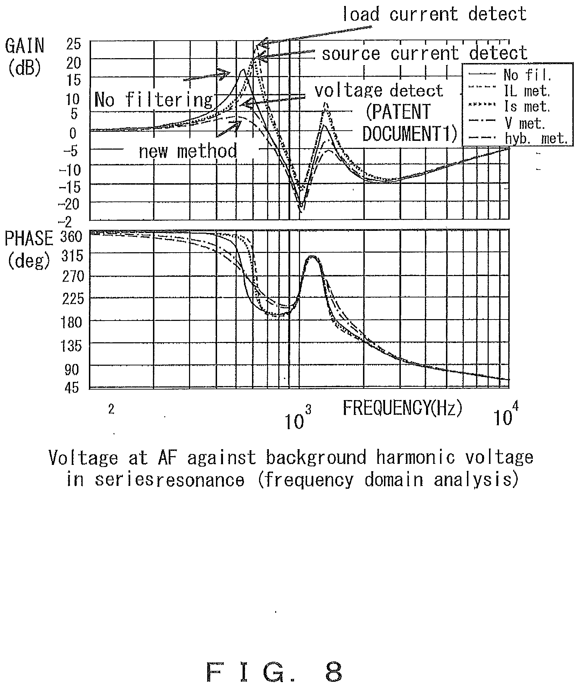

FIG. 8 illustrates an example of a comparison between frequency analysis results in a case when the resonance suppression apparatus of the present invention is applied. In FIG. 8, in comparison with the case without a resonance suppression apparatus (no filtering), the technique of Patent Document 1 (voltage detect method) lowers the peak of resonance, while the invention of the present embodiment (new method) lowers the peak of resonance more than the technique of Patent Document 1, indicating higher effects of resonance suppression from the graph.

### Industrial Applicability

The resonance suppression method of the present invention is particularly effective in a case when impedance varies due to switching of the number of cables on the wind farm side in a case when a plurality of wind farms are provided.

## Claims

1. A resonance suppression apparatus (1) that suppresses resonance occurring in a power system (100) in which a first power facility (3, 120) is connected to a second power facility (5, 110) via a power line, the resonance suppression apparatus comprising:
a current reference value generation unit (130) which inputs the current reference value to a power conversion unit (16, 200) so as to cause the power conversion unit to supply a compensation current,
**characterised in that**
the current reference value generation unit (130) generates a current reference value by subtracting a value obtained by multiplying a second transfer function by a harmonic component of a voltage input from the power system from a value obtained by multiplying a first transfer function by a harmonic component of a current input from at least one of the first and second power facilities.

2. The resonance suppression apparatus according to claim 1, wherein
a plurality of the first power facilities (3) are connected to the second power facility (5),
the current reference value generation unit (130) generates the current reference value by subtracting a value obtained by multiplying a second transfer function by a harmonic component of a voltage input from the power system from a value obtained by multiplying a first transfer function by each harmonic component of a plurality of currents input from at least two of the plurality of first power facilities and the second power facility and adding the results.

3. The resonance suppression apparatus according to claim 2, wherein
the first transfer function is different for each of the plurality of first power facilities and the second power facility.

4. A resonance suppression apparatus according to any one of claims 1 to 3 further comprising
the power conversion unit (16, 200) that supplies a compensating current to the power line on the basis of the current reference value.

5. A resonance suppression method that suppresses resonance occurring in a power system (100) in which a first power facility (3, 120) is connected to a second power facility (5, 110) via a power line, comprising:
generating a current reference value by subtracting a value obtained by multiplying a second transfer function by a harmonic component of a voltage input from the power system from a value obtained by multiplying a first transfer function by a harmonic component of a current input from at least one of the first and second power facilities; and
supplying a compensating current to the power line by conducting a prescribed power conversion on the current reference value.

## Patentansprüche

1. Resonanzunterdrückungsvorrichtung (1), die Resonanz unterdrückt, die in einem Stromversorgungssystem (100) auftritt, in dem eine erste Kraftanlage (3, 120) mittels einer Stromleitung mit einer zweiten Kraftanlage (5, 110) verbunden ist, wobei die Resonanzunterdrückungsvorrichtung umfasst:
eine Einheit (130) zur Erzeugung eines Stromreferenzwerts, die den Stromreferenzwert in eine Stromumrichtungseinheit (16, 200) eingibt, um zu bewirken, dass die Stromumrichtungseinheit einen Kompensationsstrom zuführt,
**dadurch gekennzeichnet, dass**
die Einheit (130) zur Erzeugung eines Stromreferenzwerts einen Stromreferenzwert durch Subtrahieren eines Werts, der durch Multiplizieren einer zweiten Transferfunktion mit einer harmonischen Komponente eines Spannungseingangs von dem Stromversorgungssystem erhalten wird, von einem Wert, der durch Multiplizieren einer ersten Transferfunktion mit einer harmonischen Komponente eines Stromeingangs von mindestens einer der ersten und der zweiten Kraftanlage erhalten wird, erzeugt.

2. Resonanzunterdrückungsvorrichtung nach Anspruch 1, wobei
mehrere der ersten Kraftanlagen (3) mit der zweiten Kraftanlage (5) verbunden sind,
die Einheit (130) zur Erzeugung eines Stromreferenzwerts den Stromreferenzwert durch Subtrahieren eines Werts, der durch Multiplizieren einer zweiten Transferfunktion mit einer harmonischen Komponente eines Spannungseingangs von dem Stromversorgungssystem erhalten wird, von einem Wert, der durch Multiplizieren einer ersten Transferfunktion mit jeder harmonischen Komponente von mehreren Stromeingängen von mindestens zwei der mehreren ersten Kraftanlagen und der zweiten Kraftanlage und Addieren der Resultate erhalten wird, erzeugt.

3. Resonanzunterdrückungsvorrichtung nach Anspruch 2, wobei
die erste Transferfunktion für jede der mehreren ersten Kraftanlagen und der zweiten Kraftanlage unterschiedlich ist.

4. Resonanzunterdrückungsvorrichtung nach einem der Ansprüche 1 bis 3, weiterhin umfassend:
die Stromumrichtungseinheit (16, 200), die einen kompensierenden Strom an die Stromleitung auf der Basis des Stromreferenzwerts zuführt.

5. Resonanzunterdrückungsverfahren, das Resonanz unterdrückt, die in einem Stromversorgungssystem (100) auftritt, in dem eine erste Kraftanlage (3, 120) mittels einer Stromleitung mit einer zweiten Kraftanlage (5, 110) verbunden ist, umfassend:
Erzeugen eines Stromreferenzwerts durch Subtrahieren eines Werts, der durch Multiplizieren einer zweiten Transferfunktion mit einer harmonischen Komponente eines Spannungseingangs von dem Stromversorgungssystem erhalten wird, von einem Wert, der durch Multiplizieren einer ersten Transferfunktion mit einer harmonischen Komponente eines Stromeingangs von mindestens einer der ersten und der zweiten Kraftanlage erhalten wird; und
Zuführen eines kompensierenden Stroms an die Stromleitung durch Durchführen einer vorgeschriebenen Stromumrichtung an dem Stromreferenzwert.

## Revendications

1. Appareil de suppression de résonance (1) qui supprime une résonance survenant dans un système électrique (100) dans lequel une première installation électrique (3, 120) est reliée à une seconde installation électrique (5, 110) par l'intermédiaire d'une ligne électrique, l'appareil de suppression de résonance comprenant :
une unité de génération de valeur de référence de courant (130) qui entre la valeur de référence de courant dans une unité de conversion électrique (16, 200) de façon à amener l'unité de conversion électrique à délivrer un courant de compensation,
**caractérisé par le fait que**
l'unité de génération de valeur de référence de courant (130) génère une valeur de référence de courant par soustraction d'une valeur, obtenue par multiplication d'une seconde fonction de transfert par une composante harmonique d'une tension entrée à partir du système électrique, à une valeur obtenue par multiplication d'une première fonction de transfert par une composante harmonique d'un courant entré à partir d'au moins une parmi les première et seconde installations électriques.

2. Appareil de suppression de résonance selon la revendication 1, dans lequel
une pluralité de premières installations électriques (3) sont reliées à la seconde installation électrique (5),
l'unité de génération de valeur de référence de courant (130) génère la valeur de référence de courant par soustraction d'une valeur, obtenue par multiplication d'une seconde fonction de transfert par une composante harmonique d'une tension entrée à partir du système électrique, à une valeur obtenue par multiplication d'une première fonction de transfert par chaque composante harmonique d'une pluralité de courants entrés à partir d'au moins deux parmi la pluralité de premières installations électriques et la seconde installation électrique et par addition des résultats.

3. Appareil de suppression de résonance selon la revendication 2, dans lequel
la première fonction de transfert est différente pour chacune parmi la pluralité de premières installations électriques et la seconde installation électrique.

4. Appareil de suppression de résonance selon l'une quelconque des revendications 1 à 3, comprenant en outre :
l'unité de conversion électrique (16, 200) qui délivre un courant de compensation à la ligne électrique sur la base de la valeur de référence de courant.

5. Procédé de suppression de résonance qui supprime une résonance survenant dans un système électrique (100) dans lequel une première installation électrique (3, 120) est reliée à une seconde installation électrique (5, 110) par l'intermédiaire d'une ligne électrique, comprenant :
générer une valeur de référence de courant par soustraction d'une valeur, obtenue par multiplication d'une seconde fonction de transfert par une composante harmonique d'une tension entrée à partir du système électrique, à une valeur obtenue par multiplication d'une première fonction de transfert par une composante harmonique d'un courant entré à partir d'au moins une parmi les première et seconde installations électriques ; et
délivrer un courant de compensation à la ligne électrique par réalisation d'une conversion électrique prescrite sur la valeur de référence de courant.
